(19) Europäisches Patentamt
European Patent Office
Office européen des brevets

(11) Veröffentlichungsnummer: **0 013 890 B2**

(12) # NEUE EUROPÄISCHE PATENTSCHRIFT

(45) Veröffentlichungstag der neuen Patentschrift: **02.10.85**

(51) Int. Cl.⁴: **C 08 G 18/10**, C 09 D 3/72, D 06 N 3/14

(21) Anmeldenummer: **80100056.3**

(22) Anmeldetag: **07.01.80**

(54) **Hitzehärtbare Beschichtungsmassen und ihre Verwendung zur Beschichtung von Substraten.**

(30) Priorität: **19.01.79 DE 2902090**

(43) Veröffentlichungstag der Anmeldung: **06.08.80 Patentblatt 80/16**

(45) Bekanntmachung des Hinweises auf die Patenterteilung: **18.05.83 Patentblatt 83/20**

(45) Bekanntmachung des Hinweises auf die Entscheidung über den Einspruch: **02.10.85 Patentblatt 85/40**

(84) Benannte Vertragsstaaten: **AT BE CH DE FR GB IT NL SE**

(56) Entgegenhaltungen:
**EP - A - 0 004 597**
**DE - A - 1 644 813**
**FR - A - 1 462 456**
**FR - A - 2 143 413**
**FR - A - 2 204 735**
**GB - A - 1 085 454**

**Journal of Paint Technology, Band 45, Nr. 578, März 1973, Seiten 56 bis 61**

(73) Patentinhaber: **BAYER AG, Konzernverwaltung RP Patentabteilung, D-5090 Leverkusen 1 Bayerwerk (DE)**

(72) Erfinder: **König, Eberhard, Dr., Gelber Weg 22, D-6242 Kronberg 2 (DE)**
Erfinder: **Pedain, Josef, Dr., Haferkamp 6, D-5000 Köln 80 (DE)**
Erfinder: **Koch, Hans-Joachim, Dr., Heymannstrasse 48, D-5090 Leverkusen 1 (DE)**
Erfinder: **Schmitz, Anton, Luetzenkirchnerstrasse 92, D-5090 Leverkusen 3 (DE)**
Erfinder: **Thoma, Wilhelm, Dr., Birkenweg 25, D-5090 Leverkusen 31 (DE)**
Erfinder: **Berndt, Gerhard, Rehwechsel 22, D-4019 Monheim (DE)**

EP 0 013 890 B2

**Beschreibung**

Die Erfindung betrifft zu Polyurethanharnstoffen härtbare, lösungsmittelfreie bzw. lösungsmittelarme Beschichtungsmassen sowie ihre Verwendung zur Beschichtung von Substraten, insbesondere Textilien.

Die Beschichtung von textilen Flächengebilden mit Polyurethanharnstoff-Lösungen, deren Gehalt an Lösemitteln bis zu 70 Gew.-% beträgt, gehört zum Stand der Technik. Man kann hierzu vollkommen ausreagierte Polyurethanharnstoffe oder auch solche Polyurethanharnstoffe verwenden, die zur Erzielung ihrer Beschichtungseigenschaften mit einer zweiten Komponente nachvernetzt werden müssen. Beschichtungsmittel dieser zuletzt genannten Art werden z. B. in US-PS 3 711 571 beschrieben. Hierbei werden gelöste Polyurethanharnstoffe mit Oxim-blockierten NCO-Vorpolymerisaten gemischt und während einer Hitzebehandlung in einem Trockenkanal ausgehärtet. Dieses Beschichtungsverfahren hat aber den Nachteil, daß mindestens 50 Gew.-% an Lösemitteln (der Gehalt an Blockierungsmittel nicht eingerechnet) benötigt werden.

Andere Polyurethanharnstoffbeschichtungsmassen, die kein Lösemittel enthalten, sind aus der US-PS 3 755 261 sowie DE-OS 2 462 317 bekanntgeworden. Hierbei handelt es sich um hitzehärtbare Gemische aus flüssigen NCO-Vorpolymerisaten und einem latenten Härter auf Basis von Salzen des 4,4'-Diamino-diphenylmethans (»MDA«). Die Verflüssigung des latenten Härters gelingt durch Suspendierung der MDA-Salz-Komplexe in mindestens 50 Gew.-% PVC-Weichmacher vom Typ der Phthalsäureester. Die NCO-Vorpolymerisate enthalten gemäß den Ausführungsbeispielen einen relativ hohen Gehalt an freien Diisocyanaten.

Ein derartiges Beschichtungssystem hat Nachteile auf physiologischem Gebiet. Der relativ hohe Gehalt an freiem Diisocyanat und insbesondere die Toxizität von MDA als Bestandteil des latenten Härters sind problematisch. Ein weiterer Nachteil derartiger Beschichtungen ist ihr Gehalt an Weichmachern. Wegen des »Ausblühens« oder »Ausschwitzens« des Weichmachers ist die Herstellung von trockenen, an der Oberfläche störungsfreien Deckschichten nicht möglich.

In der GB-PS 970 459 wird ein Verfahren zum Verkleben einer Schaumfolie mit einem textilen Substrat beschrieben. Bei dem Klebstrich handelt es sich um ein Reaktivgemisch, bestehend im wesentlichen aus einem Ketoxim-blockierten NCO-Präpolymer, und N,N,N',N'-Tetrakis-(2-hydroxypropyl)-äthylendiamin als Vernetzer. Da dieses System über Urethangruppen und nicht über Harnstoffgruppen ausgehärtet wird, resultieren letztlich weiche Filme, die nicht zur Herstellung von Deckstrichen geeignet sind.

Einer Veröffentlichung von J. Verhanik (Vortragsbroschüre vom Kongreß der Lederindustrie 18.—22. 10. 78 in Budapest, Seiten 1279—1288, OMKDK-Technoinform 1428; Budapest Postbox 12) über ein »thermoaktives lösemittelfreies PUR-System« ist zu entnehmen, daß phenolblockierte NCO-Präpolymere auf Polyätherbasis mit Polyätheraminen vom ungefähren Molekulargewicht 750 zu Schaumbeschichtungen verarbeitet werden können. Abgesehen von der toxischen Wirkung des Phenolabspalters hat dieses System den Nachteil, daß es aufgrund seiner mechanischen Eigenschaften auf einen ganz engen Anwendungsbereich festgelegt ist.

Aufgabe der Erfindung war es deshalb, die genannten Mängel zu vermeiden und ein lösemittelfreies bzw. -armes, physiologisch unbedenkliches Beschichtungssystem zur Verfügung zu stellen, das die anwendungstechnischen Forderungen für alle Beschichtungskomponenten, wie z. B. für einen Haft-, Schaum- oder Deckstrich bzw. auch einen verschweißbaren Deckstrich, erfüllt.

Diese Aufgabe konnte mit den nachstehend näher beschriebenen Beschichtungsmassen gelöst werden.

Gegenstand der vorliegenden Erfindung sind hitzehärtbare Zweikomponentenbeschichtungsmassen aus durch Ketoxime blockierten NCO-Vorpolymerisaten und cycloaliphatischen Diaminen, enthaltend

A) ein durchschnittlich 2 bis 4 ketoximblockierte, aromatische NCO-Gruppen aufweisendes Vorpolymerisat mit einem durchschnittlichen Molekulargewicht von 1000 bis 15 000 aus Polyhydroxylverbindungen mit 2 bis 8 Hydroxylgruppen und einem Molekulargewicht von 500 bis 10 000, gegebenenfalls unter Mitverwendung von niedermolekularen Polyolen mit einem Molekulargewicht von weniger als 300, und aromatischen Polyisocyanaten im NCO/OH-Verhältnis von 1,5 : 1 bis 6,0 : 1;

B) einen Vernetzer der Formel

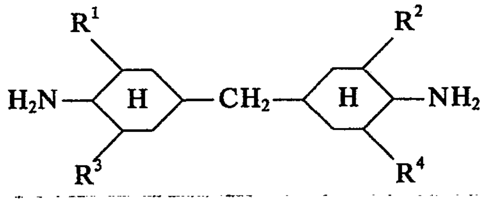

in welcher

$R^1$, $R^2$, $R^3$ und $R^4$ unabhängig voneinander für Wasserstoff oder eine $C_1-C_3$-Alkylgruppe stehen,

mit der Maßgabe, daß das Diamin zu mindestens 75% aus dem cis,cis-Isomeren besteht, wenn $R^1$ bis $R^4$ alle Wasserstoff bedeuten, sowie gegebenenfalls

C) Pigmente, Füllstoffe, Treibmittel und weitere an sich bekannte Zusatzstoffe, wobei das Äquivalentverhältnis von blockierten NCO-Gruppen zu $NH_2$-Gruppen zwischen 1,35 : 1 und 0,95 : 1 liegt, die Beschichtungsmasse insgesamt höchstens 15 Gew.-% an organischen Lösungsmitteln enthält und frei von wäßrigen Polymerdispersionen oder Polymerlösungen ist, für Haft-, Schaum- oder Deckstriche auf textilen Substraten.

Gegenstand der Erfindung ist auch die Verwendung von hitzehärtbaren Zweikomponenten-Beschichtungssystemen auf Polyurethanbasis in einem Direkt- oder Umkehrverfahren zur Beschichtung von textilen Substraten, wobei die erfindungsgemäßen Beschichtungsmassen als Deck-, Haft- oder Schaumstrich eingesetzt werden.

Für den Aufbau der Ketoxim-blockierten NCO-Vorpolymerisate kommen aromatische Polyisocyanate, wie sie eingehend in den US-Patentschriften 3 984 607 und 4 035 213, DE-OS 2 402 840 bzw. DE-AS 2 457 387 beschrieben sind, in Frage. Erfindungsgemäß bevorzugt sind 2,4'- bzw. 4,4'-Diisocyanato-diphenylmethan, die isomeren Toluylendiisocyanate sowie insbesondere Gemische dieser Diisocyanate.

Als Reaktionspartner für diese Polyisocyanate zur Herstellung der NCO-Vorpolymerisate kommen Polyhydroxylverbindungen in Frage, die 2—8, vorzugsweise 2 oder 3, Hydroxylgruppen aufweisen und ein Molekulargewicht von 500—10 000, vorzugsweise 1000—6000, haben und wie sie im Detail ebenfalls in den obengenannten Publikationen beschrieben werden.

Erfindungsgemäß bevorzugt sind im Durchschnitt 2 bis 3 Hydroxylgruppen aufweisende Propylenoxid-Polyäther, die auch Polyäthylenoxid-Einheiten enthalten können, sowie unterhalb von 60°C schmelzende Hydroxypolyester mit 2 oder 3 endständigen OH-Gruppen und einem mittleren Molekulargewicht von 1000—6000.

Erfindungsgemäß besonders bevorzugt sind Mischungen der genannten Hydroxy-Polyäther mit Hydroxypolyestern aus Adipinsäure, Hexandiol-1,6 und Neopentylglykol vom mittleren Molekulargewicht 1000—3000.

Bei der Herstellung der NCO-Vorpolymerisate können gegebenenfalls auch niedermolekulare Polyole mit einem Molekulargewicht von weniger als etwa 300 mitverwendet werden, wie sie als Kettenverlängerungsmittel an sich bekannt sind. Bevorzugt sind erfindungsgemäß in diesem Zusammenhang Butandiol-1,4 und Trimethylolpropan.

Die Herstellung der NCO-Vorpolymerisate erfolgt in an sich bekannter Weise, indem man die genannten Polyhydroxylverbindungen mit überschüssigem Diisocyanat, vorzugsweise bei ca. 70—110°C umsetzt. Man wählt hierbei ein NCO/OH-Verhältnis von 1,5 : 1 bis 6,0 : 1, vorzugsweise von 1,7 : 1 bis 2,5 : 1.

Als Blockierungsmittel für die NCO-Vorpolymerisate kommen z. B. Ketoxime aus Hydroxylamin und Ketonen wie Aceton, Methyläthylketon, Diäthylketon, Cyclohexanon, Acetophenon und Benzophenon in Frage.

Erfindungsgemäß bevorzugtes Blockierungsmittel ist Methyläthylketoxim (Butanonoxim).

Die Blockierungsreaktion wird in der Weise durchgeführt, daß man das NCO-Vorpolymerisat mit stöchiometrischen Mengen an Ketoxim bei erhöhter Temperatur, z. B. 70—100°C, bis zum Verschwinden der NCO-Gruppe umsetzt.

Die blockierten NCO-Vorpolymerisate können zwecks Einstellung der optimalen Verarbeitungsviskosität von 20—40 000 mPas bei 20°C mit bis zu 15 Gew.-%, vorzugsweise mit bis zu 10 Gew.-%, bezogen auf das blockierte NCO-Vorpolymerisat, an organischen Lösungsmitteln gemischt werden. Infolge des blockierten Charakters der NCO-Gruppen müssen hierbei nicht notwendigerweise gegenüber NCO-Gruppen inerte Lösungsmittel eingesetzt werden. Beispielsweise können Isopropanol, Äthylenglykolmonomethyl- bzw. Äthylenglykolmonoäthyläther sowie deren Essigsäureester, Methyläthylketon, Cyclohexanon, Butylacetat und DMF verwendet werden.

Als Vernetzerkomponente für die blockierten NCO-Vorpolymerisate dient erfindungsgemäß vorzugsweise 4,4'-Diamino-3,3'-dimethyl-dicyclohexylmethan, ein bei Raumtemperatur flüssiges, aliphatisches Diamin mit sehr geringem Dampfdruck.

Weitere geeignete Vernetzer sind z. B. die entsprechenden homologen 3,3'-Diethyl-, Dipropyl- und -Diisopropyl-Derivate, das 4,4'-Diamino-3,3',5,5'-tetramethyl-dicyclohexylmethan bzw. das homologe Tetraethylderivat und 4,4'-Diamino-3,5-dimethyl-3',5'-diethyl-dicyclohexylmethan.

Die Vermischung der blockierten NCO-Vorpolymerisate mit dem Diamin-Vernetzer erfolgt im allgemeinen etwa im Verhältnis der Äquivalentgewichte dieser Komponenten, obwohl für einige Anwendungszwecke auch eine Untervernetzung zweckmäßig ist, so daß das Äquivalentverhältnis von blokkiertem NCO, zu $NH_2$ erfindungsgemäß zwischen 1,35 : 1 und 0,95 : 1, bevorzugt 1,25 : 1 bis 1 : 1, liegt.

Zur Herstellung von gebrauchsfertigen Beschichtungsmassen können den erfindungsgemäßen Reaktivgemischen an sich bekannte Zuschläge, wie z. B. Pigmente, UV-Stabilisatoren, Verlaufmittel, Antioxidantien, Füllstoffe oder Treibmittel, beigemischt werden.

Mit den hitzehärtbaren Reaktivgemischen können Beschichtungen auf den in der Praxis üblichen Beschichtungsanlagen sowohl nach dem Direkt- als auch nach dem Umkehrbeschichtungsverfahren

hergestellt werden. Hierbei ist es möglich, in Abhängigkeit von dem jeweiligen spezifischen chemischen Aufbau des NCO-Vorpolymerisates, eigenschaftsmäßig verschiedene Schichten, wie z. B. eine Haft-, Schaum- oder Deckschicht, zu erzeugen.

Zur Herstellung einer Umkehrbeschichtung nach dem erfindungsgemäßen Verfahren trägt man zuerst auf einen geeigneten Zwischenträger, z. B. ein Trennpapier, das Reaktivgemisch für den Deckstrich in einer Menge von ca. 30—100 g/$m^2$ auf, härtet im Trockenkanal aus, bringt auf den trockenen Deckstrich das Reaktivgemisch für den Haftstrich ebenfalls in einer Menge von ca. 30—100 g/$m^2$ auf, kaschiert das Substrat hinzu, härtet die Beschichtung in einem weiteren Trockenkanal bei ca. 120—190°C, vorzugsweise 140—170°C, aus und zieht das beschichtete Substrat vom Trennträger ab. Selbstverständlich ist es aber auch möglich, nur den Deck- oder den Haftstrich aus den erfindungsgemäßen Beschichtungsmassen zu erzeugen und für den anderen Strich ein konventionelles Beschichtungssystem einzusetzen.

Wie schon erwähnt, können die Reaktivgemische aber auch im Direktstreichverfahren unmittelbar auf das textile Substrat aufgebracht werden. Hierbei ist der lösungsmittelfreie bzw. -arme Charakter der erfindungsgemäßen Beschichtungsmassen von großem Vorteil bei der Herstellung von dicken Planenbeschichtungen. Mit Auftragsmengen von 100—200 g/$m^2$ können auf diese Weise ca. 0,4 mm dicke, technische Beschichtungen in wenigen Arbeitsgängen erstellt werden.

Sollen aus den erfindungsgemäßen Beschichtungsmassen Schaumschichten hergestellt werden, dann setzt man ihnen beim Erhitzen Gase abspaltende Verbindungen als Treibmittel sowie zweckmäßigerweise auch Schaumstabilisatoren zu. Geeignete Zusätze werden z. B. in DE-OS 1 794 006 (GB-PS 1 211 339) sowie in US-PS 3 262 805 beschrieben.

Mit PUR-Reaktivsystemen nach dem Stand der Technik war es bisher in der Regel nur möglich, Zwischenschichten, beispielsweise Haftstriche oder Schaumschichten, zu erzeugen. Für die Herstellung von Deckschichten mußte man die eingangs erwähnten Zugeständnisse an, z. B. an mangelhafte Grifftrockenheit oder eine problematische Physiologie der Ausgangskomponenten machen. Nach dem vorliegenden breiten Stand der Technik war es nicht zu erwarten, daß mit dem speziellen Reaktivsystem nach dem erfindungsgemäßen Verfahren auch Deckstriche für die Textilbeschichtung hergestellt werden könnten. Es war daher überraschend, daß erfindungsgemäß auch Deckschichten, die in ihrem mechanischen Eigenschaftsniveau mit denjenigen aus PUR-Lösungen vergleichbar sind, hergestellt werden können.

Der Vorteil des erfindungsgemäßen Verfahrens gegenüber dem Stand der Technik liegt auch darin begründet, daß die verwendeten Ausgangskomponenten nach dem heutigen Wissensstand physiologisch unbedenklich sind.

Die nachfolgenden Beispiele erläutern die vorliegende Erfindung.

## Herstellung der blockierten NCO-Vorpolymerisate

### Vorpolymerisat A

4000 g eines Hydroxylpolyäthers auf Basis von Trimethylolpropan und Propylenoxid mit dem Molekulargewicht 6000 sowie 275 g eines Hydroxylpolyäthers auf Basis von Bisphenol A und Propylenoxid mit dem Molekulargewicht 550 werden mit 375 g 4,4'-Diisocyanato-diphenylmethan sowie 261 g 2,4-Diisocyanato-toluol bei 80—90°C umgesetzt, bis der berechnete NCO-Gehalt von 2,56 Gew.-% knapp unterschritten ist. Danach rührt man in die Mischung bei 60—70°C 261 g Butanonoxim ein. Nach ca. 20 min ist IR-spektroskopisch kein NCO mehr nachweisbar. Das blockierte NCO-Vorpolymerisat, eine klare, farblose Flüssigkeit mit einer Viskosität von ca. 50 000 mPas bei 20°C, hat einen bestimmbaren, latenten NCO-Gehalt von 2,34 Gew.-% und somit ein NCO-Äquivalentgewicht von 1800.

### Vorpolymerisat B

2000 g eines Polyäthers auf Basis von Trimethylolpropan und Propylenoxid mit einem Molekulargewicht von 6000, 1000 g eines linearen Polyäthers auf Basis von Propylenglykol und Propylenoxid mit einem Molekulargewicht von 1000, 1450 g eines linearen Polyesters auf Basis von Hexandiol-1,6, Neopentylglykol und Adipinsäure vom Molekulargewicht 1700 sowie 22,5 g Butandiol-1,4 werden mit 1125 g 4,4'-Diisocyanato-diphenylmethan und 174 g 2,4-Diisocyanato-toluol ca. 3 h lang bei 80—90°C umgesetzt, bis der berechnete NCO-Gehalt von 4,26 Gew.-% knapp unterschritten ist. Anschließend werden bei 60—70°C 496 g Butanonoxim sowie 696 g Äthylenglykolmonomethylätheracetat rasch eingerührt. Nach 20 min ist IR-spektroskopisch kein NCO mehr nachweisbar. Das blockierte NCO-Vorpolymerisat, eine farblose, klare Flüssigkeit mit einer Viskosität von ca. 40 000 mPas bei 20°C, hat einen bestimmbaren, latenten NCO-Gehalt von 3,3 Gew.-% und somit ein NCO-Äquivalentgewicht von 1280.

Vorpolymerisat C

2000 g eines Hydroxylpolyesters auf Basis von Hexandiol-1,6, Neopentylglykol und Adipinsäure mit einem Molekulargewicht von 1700 werden mit 358 g 2,4-Diisocyanato-toluol bei 80—90° C bis zu einem NCO-Gehalt von 4,25 Gew.-% umgesetzt. In dieses Präpolymere werden bei 70° C 174 g Butanonoxim sowie 250 g Äthylenglykolmonomethylätheracetat rasch eingerührt. Nach ca. 20 min ist IR-spektroskopisch kein NCO mehr nachweisbar. Das blockierte NCO-Vorpolymerisat, eine farblose, klare Flüssigkeit mit einer Viskosität von ca. 40 000 mPas bei 20° C, hat einen bestimmbaren, latenten NCO-Gehalt von 3,5 Gew.-% und somit ein NCO-Äquivalentgewicht von 1200.

Beispiel 1

Dieses Beispiel beschreibt die Herstellung einer Textilbeschichtung, bestehend aus einem Baumwollsubstrat, einem Haft- und einem Deckstrich, nach dem Umkehrverfahren.

Die Haftstrichpaste besteht aus 1800 g an Vorpolymerisat A und 119 g (d. h. einer äquimolaren Menge) an 4,4'-Diamino-3,3'-dimethyl-dicyclohexylmethan. Ihre Viskosität beträgt bei Raumtemperatur ca. 30 000 mPas und bleibt mindestens 2 Wochen unverändert.

Die Deckstrichpaste besteht aus 1280 g Vorpolymerisat B und 119 g (d. h. einer äquimolaren Menge) 4,4'-Diamino-3,3'-dimethyl-dicyclohexylmethan. Außerdem enthält die Deckstrichpaste 10 Gew.-% einer handelsüblichen Pigmentanreibung, 0,2 Gew.-% Silikonöl und 2 Gew.-% eines Silikat-Füllstoffes. Die Viskosität dieser anwendungsfertigen Paste beträgt bei Raumtemperatur ca. 40 000 mPas.

Auf einer Beschichtungsmaschine mit 2 Streichwerken wird mittels eines Walzenrakels die obige Deckstrichpaste in einer Auftragsmenge von 70 g/m$^2$ auf ein Trennpapier aufgetragen und in einem Trockenkanal bei 140—160° C während 2 min ausgehärtet. An dem zweiten Streichwerk wird in analoger Weise die obige Haftstrichpaste (Auftragsmenge 60 g/m$^2$) auf den ausgehärteten Deckstrich gerakelt. Anschließend wird die Textilbahn, eine gerauhte Baumwollware, hinzukaschiert. Im 2. Trokkenkanal wird daraufhin der Haftstrich bei 140—160° C während 2—3 min ausgehärtet.

Die Beschichtung weist einen trockenen und weichen Griff mit einer Oberflächenhärte im Bereich von Shore A 80 auf. Ihre Knickechtheiten, ihre Chemischreinigungsbeständigkeit sowie ihre Hydrolyseechtheit sind gut.

Beispiel 2

Herstellung einer Textilbeschichtung, bestehend aus einem Baumwollsubstrat, einem Haft-, Schaum- und Deckstrich, nach dem Umkehrverfahren

Die Haft- sowie die Deckstrichpaste haben die im Beispiel 1 beschriebene Zusammensetzung.

Die Schaumstrichpaste besteht aus 1280 g Vorpolymerisat B und 119 g (d. h. einer äquimolaren Menge) an 4,4'-Diamino-3,3'-dimethyl-dicyclohexylmethan. Außerdem enthält die Schaumstrichpaste 15 Gew.-% Diphenyl-3,3'-disulfonhydrazid als Treibmittel, 0,2 Gew.-% Silikonöl und 2 Gew.-% eines Silikat-Füllstoffes. Die Viskosität dieser anwendungsfertigen Paste beträgt bei Raumtemperatur ca. 40 000 mPas.

An dem 2. Streichwerk der in Beispiel 1 genannten Beschichtungsmaschine wird die Deckstrichpaste in einer Menge von 60 g/m$^2$ auf ein Trennpapier aufgetragen und in dem anschließenden Trockenkanal bei 140—160° C während 1—3 min, je nach Wirkungsgrad und Düsenanordnung im Trockenkanal, ausgehärtet. Der vernetzte Deckstrich wird mit dem Trennpapier aufgerollt. Nach diesem Arbeitsgang wird der Deckstrich auf dem Trennpapier nochmals am Beginn der Beschichtungsmaschine vorgelegt. Am ersten Streichwerk wird die Schaumstrichpaste in einer Menge von 180 g/m$^2$ auf den Deckstrich aufgetragen und im Trockenkanal bei 140—160° C aufgeschäumt und vernetzt. Am zweiten Streichwerk wird die Haftstrichpaste in einer Menge von 60 g/m$^2$ auf die Schaumschicht gerakelt. Anschließend wird die Textilbahn, eine nicht gerauhte Baumwollware, hinzukaschiert. Nach abermaliger Aushärtung im Trockenkanal und nach Passieren der Kühlwalzen wird die Beschichtung vom Trennpapier abgezogen und aufgerollt. Die Beschichtung hat einen trockenen und weichen Griff. Ihre Knickechtheiten sind auch nach Alterung in der 90° C-Hydrolyse sehr gut.

Beispiel 3

Herstellung einer dicken, verschweißbaren Planen-Beschichtung nach dem Direktstreichverfahren

Die Haftstrichpaste besteht aus 1280 g Vorpolymerisat B und 102 g 4,4'-Diamino-3,3'-dimethyl-dicyclohexylmethan. Die Reaktivkomponenten liegen hierbei in einem Äquivalentverhältnis $NCO/NH_2$ = 1,25 vor. Außerdem enthält die Paste 2 Gew.-% eines Silikat-Füllstoffes, 0,5 Gew.-% Silikonöl und 10

Gew.-% eines PVC-Plastisols.

Die Deckstrichpaste besteht aus 1200 g Vorpolymerisat C und 119 g (d. h. einer äquimolaren Menge) an 4,4'-Diamino-3,3'-dimethyl-dicyclohexylmethan. Außerdem enthält die Deckstrichpaste 10 Gew.-% eines abgemahlenen Pigmentpulvers und 2 Gew.-% Silikonöl. Die anwendungsfertige Paste hat eine Viskosität von ca. 40 000 mPas bei Raumtemperatur.

Auf einer Beschichtungsmaschine der in den Beispielen 1 und 2 genannten Art werden am ersten Walzenrakel 100 g/m$^2$ der obigen Haftstrichpaste auf eine Textilbahn aus Polyestergewebe aufgetragen. Die Aushärtung dieses Haftstriches findet in dem anschließenden Trockenkanal bei 140—160°C statt. An dem zweiten Streichwerk werden auf diesen Haftstrich 200 g/m$^2$ der Deckstrichpaste aufgerakelt und in dem zweiten Trockenkanal, wie bereits beschrieben, ausgehärtet.

Falls erforderlich, läßt sich das hier geschilderte Beschichtungsverfahren auch auf die Beschichtung der Planenrückseite anwenden.

Man erhält eine ca. 0,3 mm dicke Plane mit guter Licht- und Wetterbeständigkeit. Die Knickechtheiten sind sehr gut. Die Plane ist sowohl thermisch als auch mittels Hochfrequenz verschweißbar.

**Patentansprüche**

1. Hitzehärtbare Zweikomponentenbeschichtungsmasse aus durch Ketoxime blockierten NCO-Vorpolymerisaten und cycloaliphatischen Diaminen, enthaltend

A) ein durchschnittlich 2 bis 4 ketoximblockierte, aromatische NCO-Gruppen aufweisendes Vorpolymerisat mit einem durchschnittlichen Molekulargewicht von 1000 bis 15 000 aus Polyhydroxylverbindungen mit 2 bis 8 Hydroxylgruppen und einem Molekulargewicht von 500 bis 10 000, gegebenenfalls unter Mitverwendung von niedermolekularen Polyolen mit einem Molekulargewicht von weniger als 300, und aromatischen Polyisocyanaten im NCO/OH-Verhältnis von 1,5 : 1 bis 6,0 : 1;

B) einen Vernetzer der Formel

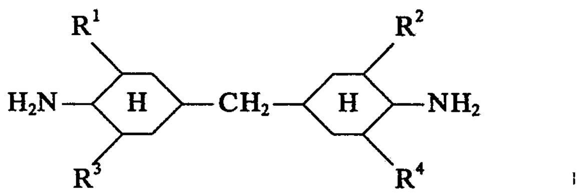

in welcher
$R^1$, $R^2$, $R^3$ und $R^4$ unabhängig voneinander für Wasserstoff oder eine $C_1-C_3$-Alkylgruppe stehen, mit der Maßgabe, daß das Diamin zu mindestens 75% aus dem cis,cis-Isomeren besteht, wenn $R^1$ bis $R^4$ alle Wasserstoff bedeuten, sowie gegebenenfalls

C) Pigmente, Füllstoffe, Treibmittel und weitere an sich bekannte Zusatzstoffe, wobei das Äquivalentverhältnis von blockierten NCO-Gruppen zu $NH_2$-Gruppen zwischen 1,35 : 1 und 0,95 : 1 liegt, die Beschichtungsmasse insgesamt höchstens 15 Gew.-% an organischen Lösungsmitteln enthält und frei von wäßrigen Polymerdispersionen oder Polymerlösungen ist, für Haft-, Schaum- oder Deckstriche auf textilen Substraten.

2. Beschichtungsmasse nach Anspruch 1, dadurch gekennzeichnet, daß Komponente A) ein durchschnittliches Molekulargewicht von 2000 bis 8000 aufweist.

3. Beschichtungsmasse nach Ansprüchen 1 und 2, dadurch gekennzeichnet, daß zur Herstellung von Komponente A) 2,4'- bzw. 4,4'-Diphenylmethandiisocyanat, die isomeren Toluylendiisocyanate oder ihre Gemische eingesetzt werden.

4. Beschichtungsmasse nach Ansprüchen 1 bis 3, dadurch gekennzeichnet, daß 2 bis 3 Hydroxylgruppen aufweisende Propylenoxid-Polyether, die gegebenenfalls auch Polyethylenoxideinheiten enthalten können, und/oder 2 bis 3 endständige Hydroxylgruppen aufweisende Hydroxypolyester mit einem Schmelzpunkt unterhalb 60°C und einem Molekulargewicht von 1000 bis 6000 eingesetzt werden.

5. Beschichtungsmasse nach Ansprüchen 1 bis 4, dadurch gekennzeichnet, daß Mischungen der Hydroxylgruppen aufweisenden Polyether mit Hydroxypolyestern aus Adipinsäuren, Hexandiol-1,6 und Neopentylglykol, vom Molekulargewicht 1000 bis 3000 eingesetzt werden.

6. Beschichtungsmasse nach Ansprüchen 1 bis 5, dadurch gekennzeichnet, daß die NCO-Gruppen von Komponente A) mit Methylethylketoxim blockiert sind.

7. Beschichtungsmasse nach Ansprüchen 1 bis 6, dadurch gekennzeichnet, daß Komponente B) 4,4'-Diamino-3,3'-dimethyl-dicyclohexylmethan ist.

8. Verwendung hitzehärtbarer Zweikomponentenbeschichtungsmassen gemäß Ansprüchen 1 bis 7 als Deck-, Haft- oder Schaumschicht zur Direkt- und Umkehrbeschichtung von textilen Substraten.

**Claims**

1. Thermosetting two-component coating composition obtained from ketoxime-blocked NCO prepolymers and cycloaliphatic diamines and containing

A) a prepolymer having an average molecular weight of from 1,000 to 15,000 and containing an average of 2 to 4 ketoxime-blocked aromatic NCO groups, obtained from polyhydroxyl compounds having a molecular weight of from 500 to 10,000 and containing 2 to 8 hydroxyl groups, optionally also using low molecular weight polyols having a molecular weight of less than 300, and aromatic polyisocyanates in an NCO/OH ratio of 1.5 : 1 to 6.0 : 1;
B) a cross-linking agent of the formula

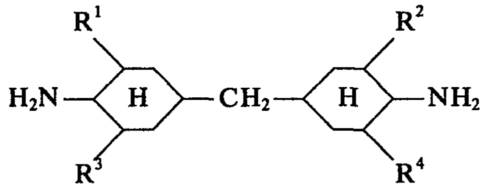

in which
$R^1$, $R^2$, $R^3$ and $R^4$ independently of one another represent hydrogen or a $C_1-C_3$-alkyl group, with the proviso that at least 75% of the diamine consists of the cis,cis-isomer if $R^1$ to $R^4$ all denote hydrogen, and, optionally,
C) pigments, fillers, blowing agents and other known additives wherein the equivalent ratio of blocked NCO groups to $NH_2$ groups is between 1.35 : 1 and 0.95 : 1, the coating composition contains a total of not more than 15% by weight of organic solvents and is free from aqueous polymer dispersions or polymer solutions, for adhesive coats, foam coats or top coats on textile substrates.

2. Coating composition according to Claim 1, characterised in that component A) has an average molecular weight of from 2,000 to 8,000.
3. Coating composition according to Claims 1 and 2, characterised in that 2,4'- or 4,4'-diphenylmethanediisocyanate, the isomeric tolylene diisocyanates or mixtures thereof are used for the preparation of component A).
4. Coating composition according to Claims 1 to 3, characterised in that propylene oxide polyethers which contain 2 to 3 hydroxyl groups and can optionally also contain polyethylene oxide units, and/or hydroxypolyesters which contain 2 to 3 terminal hydroxyl groups and have a melting point below 60° C and a molecular weight of from 1,000 to 6,000 are used.
5. Coating composition according to Claims 1 to 4, characterised in that mixtures of the polyethers containing hydroxyl groups with hydroxypolyesters of adipic acid, 1,6-hexanediol and neopentyl glycol, having a molecular weight of from 1,000 to 3,000 are used.
6. Coating composition according to Claims 1 to 5, characterised in that the NCO groups of component A) are blocked with methyl ethyl ketoxime.
7. Coating composition according to Claims 1 to 6, characterised in that component B) is 4,4'-diamino-3,3'-dimethyl-dicyclohexylmethane.
8. Use of thermosetting two-component coating compositions according to Claims 1 to 7 as a top coat, adhesive coat or foam coat for the direct and reversal coating of textile substrates.

**Revendications**

1. Masse de revêtement thermodurcissable à deux composants consistant

— en prépolymères à groupes NCO bloqués par des cétoximes et
— en diamines cycloaliphatiques contenant

A) Un prépolymère portant en moyenne 2 à 4 groupes NCO aromatiques bloqués par des cétoximes, d'un poids moléculaire moyen de 1000 à 15 000, de composés polyhydroxylés portant 2 à 8 groupes hydroxy et présentant un poids moléculaire de 500 à 10 000, le cas échéant avec utilisation conjointe de polyols à bas poids moléculaire présentant un poids moléculaire inférieur à 300, et de polyisocyanates aromatiques, le rapport de NCO/OH étant de 1,5 : 1 à 6,0 : 1;

B) un agent réticulant de formule

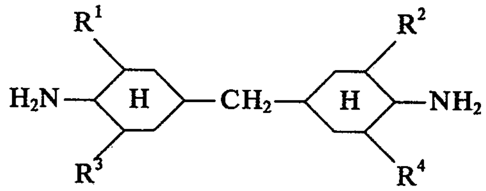

dans laquelle

$R^1$, $R^2$, $R^3$ et $R^4$ représentent, indépendamment les uns des autres, l'hydrogène ou un groupe alkyle en $C_1-C_3$, étant spécifié que la diamine consiste pour au moins 75% en l'isomère cis,cis lorsque $R^1$ à $R^4$ représentent tous des atomes d'hydrogène, et le cas échéant

C) des pigments, des matières de charge, des agents gonflants et d'autres additifs connus en soi, le rapport entre les équivalents de groupes NCO bloqués et les équivalents de groupes $NH_2$ allant de 1,35 : 1 à 0,95 : 1, la masse de revêtement contenant au total au maximum 15% en poids de solvants organiques et étant exempte de dispersions ou solutions aqueuses de polymères, pour des couches d'adhérence, des couches de mousse ou des couches de couverture sur des supports textiles.

2. Masse de revêtement selon la revendication 1, caractérisée en ce que le composant A) a un poids moléculaire moyen de 2000 à 8000.

3. Masse de revêtement selon les revendications 1 et 2, caractérisée en ce que, pour la préparation du composant A), on a utilisé le 2,4'- et/ou le 4,4'-diphénylméthane-diisocyanate, les toluylène-diisocyanates isomères ou leurs mélanges.

4. Masse de revêtement selon les revendications 1 à 3, caractérisée en ce que l'on utilise des polyéthers d'oxydes de propylène contenant 2 à 3 groupes hydroxy et qui peuvent le cas échéant contenir également des motifs d'oxyde d'éthylène et/ou des hydroxypolyesters portant 2 à 3 groupes hydroxy dans les positions terminales et présentant un point de fusion inférieur à 60° C et un poids moléculaire de 1000 à 6000.

5. Masse de revêtement selon les revendications 1 à 4, caractérisée en ce que l'on utilise des mélanges de polyéthers portant des groupes hydroxy avec des hydroxypolyesters de l'acide adipique, du 1,6-hexane-diol et du glycol néopentylique, de poids moléculaire 1000 à 3000.

6. Masse de revêtement selon les revendications 1 à 5, caractérisée en ce que les groupes NCO du composant A) sont bloqués par la méthyléthylcétoxime.

7. Masse de revêtement selon les revendications 1 à 6, caractérisée en ce que le composant B) est le 4,4'-diamino-3,3'-diméthyl-dicyclohexylméthane.

8. Utilisation de masses de revêtement thermodurcissables à deux composants selon les revendications 1 à 7, en couches de couverture, d'adhérence ou de mousse pour le revêtement direct et inversé de supports textiles.